# EUROPÄISCHE PATENTANMELDUNG

(11) **EP 1 973 310 A1**
(43) Veröffentlichungstag der Anmeldung: **24.09.2008**
(21) Anmeldenummer: 07005930.8
(22) Anmeldetag: 22.03.2007
(51) Int. Cl.: H04M 1/02, H04Q 7/32, G06K 7/00, H04B 1/38, H04M 1/725

(54) **Adaptereinheit für ein Mobilfunkendgerät**

(71) Anmelder: Holwerda, Denny, 7545 Enschede (NL)
(72) Erfinder: Holwerda, Denny, 7545 Enschede (NL)
(74) Vertreter: Stenger, Watzke & Ring

(57) **Zusammenfassung**

Die vorliegende Erfindung betrifft eine Adaptereinheit (5) für ein Mobilfunkendgerät (1). Um eine Adaptereinheit (5) bereitzustellen, welche die Nutzung mehrerer Prozessorkarten (6) ermöglicht, ohne daß das Mobilfunkendgerät (1) durch lästiges Öffnen und Schließen beschädigt und/oder verunreinigt wird, wird mit der Erfindung vorgeschlagen, daß die Adaptereinheit (5) wenigstens zwei Aufnahmeeinrichtungen zur Aufnahme jeweils einer Prozessorkarte (6) aufweist, wobei die Aufnahmeeinrichtungen der Adaptereinheit (5) mit der Aufnahmeeinrichtung (2) des Mobilfunkendgeräts (1) verbindbar sind.

## Beschreibung

Die vorliegende Erfindung betrifft eine Adaptereinheit für ein Mobilfunkendgerät, insbesondere Mobiltelefon, wobei das Mobilfunkendgerät eine Lese-Schreibe-Elektronik und eine damit verbindbare Aufnahmeeinrichtung zur Aufnahme einer Prozessorkarte aufweist.

Herkömmliche Prozessorkarten für Mobilfunkendgeräte sind SIM-Karten, welche etwa teilnehmerrelevante Daten, Algorithmen und eine Netzzugangsberechtigung für ein bestimmtes Netz eines Mobilfunkanbieters enthalten. Die SIM-Karten sind auch unter dem Namen "Mini-Card" bekannt und weisen einen Chip auf, welcher mit einer entsprechenden Lese-Schreibe-Einrichtung eines Mobilfunkendgeräts verbunden wird und auf dem die genannten Daten gespeichert sind.

Erfindungsgemäß umfaßt der Begriff "Mobilfunkendgerät" mobile Endgeräte wie beispielsweise Mobiltelefone, Handhelds, Laptops, Palmtops usw. Diese weisen meist eine Aufnahmeeinrichtung zur Aufnahme einer SIM-Karte auf, wobei in die Aufnahmeeinrichtung eine SIM-Karte eingefügt und somit ein Kontakt zwischen einer Lese-Schreibe-Elektronik eines Mobilfunkendgerätes und dem Chip der SIM-Karte hergestellt werden kann. Desweiteren sind SIM-Karten bekannt, welche zwei SIM-Kartenchips aufweisen, so daß beispielsweise eine Trennung von beruflicher und privater Nutzung des Mobilfunkendgerätes erfolgen kann. Dazu weist jeder SIM-Kartenchip eine eigene Rufnummer und entsprechende Netzzugangsberechtigung auf, wobei ein Nutzer zwischen den SIM-Karten wechseln kann, indem er beispielsweise das Mobilfunkendgerät aus- und anschließend wieder einschaltet.

Durch die Größe einer Mini-Karte, welche eine standardisierte Größe aufweist, ist die Anzahl der in dieser Mini-Karte anordbaren SIM-Kartenchips begrenzt. Daher muß eine herkömmliche Mini-Karte der Aufnahmeeinrichtung eines Mobilfunkendgeräts entnommen werden, wenn beispielsweise statt einem oder zwei Kartenchips mit den darin gespeicherten Daten zusätzlich eine weitere SIM-Karte, Prepaid-Karte oder anderweitige anbieterspezifische Karten verwendet werden sollen, um beispielsweise eine weitere Trennung der Nutzung des Mobilfunkendgeräts bezüglich der persönlichen oder tariflichen Wünsche und Anforderungen zu realisieren. Dazu muß ein derartiges Mobilfunkendgerät geöffnet und wieder verschlossen werden, was nicht nur eine lästige Arbeit ist, sondern auch zu Beschädigungen und/oder Verunreinigungen beispielsweise der Aufnahmeeinrichtung und damit verbundener Kontaktelemente führen kann.

Ausgehend von diesem Stand der Technik ist die **Aufgabe** der vorliegenden Erfindung, eine Adaptereinheit für ein Mobilfunkendgerät bereitzustellen, welche die Nutzung mehrerer Prozessorkarten mit einem Mobilfunkendgerät ermöglicht, ohne daß das Mobilfunkendgerät durch lästiges Öffnen und Schließen beschädigt und/oder verunreinigt wird.

Diese Aufgabe wird erfindungsgemäß durch eine Adaptereinheit nach Anspruch 1 **gelöst**.

Erfindungsgemäß weist die Adaptereinheit wenigstens zwei Aufnahmeeinrichtungen zur Aufnahme jeweils einer Prozessorkarte auf, wobei die Aufnahmeeinrichtungen der Adaptereinheit mit der Aufnahmeeinrichtung des Mobilfunkendgeräts verbindbar sind. Vorzugsweise weist die Adaptereinheit mehrere Aufnahmeeinrichtungen auf, so daß beispielsweise SIM-Karten unterschiedlichster Anbieter und damit verbundener Tarife von der Adaptereinheit aufgenommen werden können. Die Adaptereinheit, insbesondere deren Aufnahmeeinrichtungen, wird bzw. werden mit der Aufnahmeeinrichtung und einem damit verbundenen Prozessorkarten-Kontaktfeld eines herkömmlichen Mobilfunkendgeräts verbunden, wodurch ein bisher gebräuchliches Mobilfunkendgerät weiter benutzt und eine daran anschließbare Adaptereinheit ausgewählt werden kann, welche eine gewünschte Anzahl von Aufnahmeeinrichtungen für Prozessorkarten aufweist.

Obwohl heute meist als Prozessorkarte eine SIM-Karte verwendet wird, ist es im Rahmen der Erfindung vorgesehen, daß auch andere Prozessorkarten in entsprechend dafür ausgebildete Aufnahmeeinrichtungen der Adaptereinheit eingesetzt werden können. Diese Prozessorkarten können beispielsweise als Speicherkarte ausgebildet sein, die ein eigenes Betriebssystem aufweist. Dadurch kann die Verwendung eines mit einer erfindungsgemäßen Adaptereinheit verbundenen Mobilfunkendgeräts sehr flexibel gestaltet werden, indem eine derartige Prozessorkarte beispielsweise einen digitalen Empfang von weiteren anbieterspezifischen Leistungen ermöglicht. Hierbei sind beispielsweise der Empfang von digitalen Fernseh-, Radio- und/oder Videokanälen zu nennen, welche etwa über das Betriebssystem der Prozessorkarte in von dem Mobilfunkendgerät verarbeitbare und ausgebbare Daten umgewandelt werden. Dabei kann zudem vorgesehen sein, daß die Prozessorkarte eine Zugangsberechtigung aufweist, welche beispielsweise die Nutzung etwaiger kostenpflichtiger Kanäle und/oder deren Entschlüsselung ermöglicht. Desweiteren ist es möglich, daß eine entsprechende Abrechnung bezogener Leistungen entweder über einen Mobilfunkanbieter erfolgt, indem beispielsweise die zusätzliche Prozessorkarte über eine Elektronik eines Mobilfunkendgeräts mit der SIM-Karte des Mobilfunkendgeräts kommuniziert, das heißt beispielsweise einen Anbietercode, einen der spezifischen bezogenen Leistung entsprechenden Code und/oder Daten bezüglich des Nutzungszeitraums an die SIM-Karte übergibt, welche diese Daten zur Abrechnung an das entsprechende Mobilfunknetz eines Mobilfunkanbieters sendet. Es sind somit verschiedenste Nutzungs- und Abrechnungsvariationen möglich, so daß ein mit einer erfindungsgemäßen Adaptereinheit versehenes Mobilfunkendgerät eine sehr große Anwendungsvielfalt aufweist.

Nach einer vorteilhaften Ausgestaltung der Erfindung ist die Adaptereinheit in ein Gehäuse des Mobilfunkendgeräts integrierbar. Dadurch wird die Handhabung eines Mobilfunkendgeräts durch Hinzunahme einer erfindungsgemäßen Adaptereinheit nicht negativ beeinträchtigt. Dabei kann die Adaptereinheit beispielsweise statt einer Rückwand des Mobiltelefons an diesem angeordnet werden, wodurch sich die bauliche und somit auch optische Ausgestaltung des Mobiltelefons nur wenig verändert. Die Adaptereinheit kann aber auch je nach Endgerätart und Wunsch irgendwie anders an oder in einem Gehäuse eines Mobilfunkendgeräts angeordnet, beispielsweise an das Mobilfunkendgerät angeklemmt oder angeschraubt werden. Desweiteren kann auch vorgesehen sein, die Adaptereinheit derart auszubilden, daß sie in bereits vorhandene Aufnahmen eines Mobilfunkendgeräts aufgenommen werden kann.

Gemäß einer weiteren vorteilhaften Ausgestaltung der Erfindung weist die Adaptereinheit eine Auswahleinrichtung auf. Diese Auswahleinrichtung kann manuell oder elektronisch ausgebildet sein und dient zur Auswahl derjejenigen Prozessorkarte, welche momentan verwendet werden soll. Dabei kann eine manuell betätigbare Auswahleinrichtung beispielsweise als Drehrad oder Druckknopf ausgebildet und zudem mit einer Elektronik zur Ausführung verschiedener verbunden sein, wobei die Funktionen beispielsweise über eine verschieden lange Betätigung eines Druckknopfes angewählt und ausgeführt werden können.

Eine weitere vorteilhafte Ausgestaltung der Erfindung sieht vor, daß die Adaptereinheit eine Kontrolleinrichtung aufweist, welche eine Kontrolle der jeweils momentan benutzten Prozessorkarte ermöglicht, so daß nicht versehentlich eine Prozessorkarte verwendet wird, die beispielsweise als SIM-Karte mit einem für die spezifische Nutzung ungünstigen Tarif verbunden ist. Bei der Kontrolleinrichtung kann es sich dabei beispielsweise um eine akustische oder eine optische Kotrolleinrichtung handeln, wobei es zudem möglich ist, daß das Mobilfunkendgerät eine Kontrolle der verwendeten Prozessorkarte über Vibrationen ermöglicht. Zudem sind auch Kombinationen dieser verschiedenen Ausgabeformen denkbar. Bei Verwendung einer akustischen Kontrolleinrichtung kann das Mobilfunkendgerät oder die Adaptereinheit selbst ein akustisches Signal ausgeben, welches einen Rückschluß auf die momentan verwendete Prozessorkarte erlaubt. Eine optische Kontrolleinrichtung kann beispielsweise eine LCD-Anzeige, eine LED-Anzeige oder eine OLED-Anzeige sein. Die jeweilige Ausgestaltung der optischen Kontrolleinrichtung kann je nach Wunsch oder Anforderung erfolgen. Die Kontrolleinrichtung kann zudem mit einer Kontrollelektronik verbunden sein, so daß beispielsweise eine angezeigte Nummer einer Prozessorkarte während des Auswählens einer Prozessorkarte blinkt und erst nach endgültiger Bestätigung stetig aufleuchtet, wodurch die Handhabung der Adaptereinheit weitestgehend vereinfacht wird.

Nach einer weiteren vorteilhaften Ausgestaltung der Erfindung ist vorgesehen, daß die Adaptereinheit an die Energieversorgung des Mobilfunkendgeräts anschließbar ist. Dabei kann die Adaptereinheit selbst mit einer somit mit Energie versorgten Elektronik versehen werden, welche in Form einer Elektronik der Auswahleinrichtung bzw. der Kontrolleinrichtung gegeben sein kann. Zudem ist es beispielsweise möglich, daß die Adaptereinheit eine Aufnahme für eine Rückwand eines Mobiltelefons aufweist, was insbesondere dann von Vorteil ist, wenn in die Rückwand technische Einrichtungen des Mobiltelefons, wie beispielsweise eine Vibrationseinrichtung, integriert sind. Die in der Adaptereinheit aufgenommene Rückwand kann somit über die Adaptereinheit an die Energieversorgungseinrichtung des Mobiltelefons angeschlossen werden, so daß das mit einer Adaptereinheit versehene Mobiltelefon voll funktionsfähig bleibt.

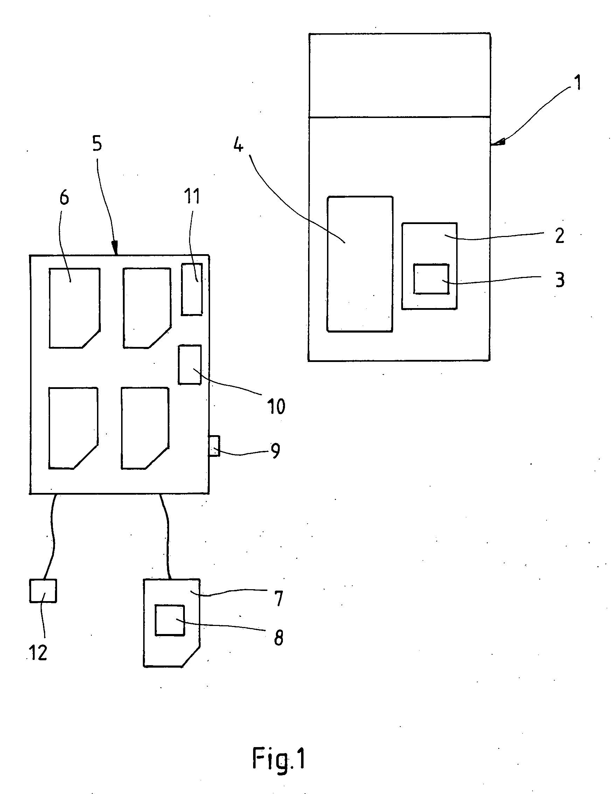

Weitere Vorteile und Merkmale der vorliegenden Erfindung werden im folgenden anhand der Figur beschrieben. Dabei zeigt
- Figur 1: eine schematische Darstellung eines Ausführungsbeispiels für eine erfindungsgemäße Adaptereinheit und ein Mobilfunkendgerät.

In Figur 1 ist ein Mobilfunkendgerät 1 in Form eines Mobiltelefons dargestellt, bei dem die Rückwand abgenommen ist, so daß die Aufnahmeeinrichtung 2 und das damit verbundene Kontaktfeld 3 sowie die Energieversorgungseinrichtung 4 in Form eines Akkus zu sehen sind. Die Adaptereinheit 5 ist derart ausgestaltet, daß sie statt der Rückwand an dem Mobilfunkendgerät anbringbar ist, wodurch die bauliche Ausgestaltung des Mobilfunkendgeräts 1 nur unwesentlich verändert wird. Die Adaptereinheit 5 weist vier Prozessorkarten 6 auf, welche jeweils in einer entsprechenden Aufnahmeeinrichtung der Adaptereinheit 5 angeordnet sind. Die Adaptereinheit 5 ist mit der Aufnahmeeinrichtung 2 des Mobilfunkendgeräts 1 über einen einer Prozessorkarte 6 in der Form entsprechenden Stecker 7 verbindbar, welcher zur Kontaktierung des Kontaktfeldes 3 des Mobilfunkendgeräts 1 ein entsprechendes Kontaktfeld 8 aufweist, wobei das Kontaktfeld 3 des Mobilfunkendgeräts 1 mit einer Lese-Schreibe-Elektronik verbunden ist. Die Adaptereinheit 5 weist weiterhin eine Auswahleinrichtung 9 auf, welche in dieser Ausführung als Druckelement ausgebildet ist, das seitlich an der Adaptereinheit 5 angeordnet ist. Durch Betätigung dieses Druckelements ist eine der Prozessorkarten 6 auswählbar und zudem die Auswahl bestätigbar. Zur Kontrolle, welche der Prozessorkarten 6 momentan verwendet wird, weist die Adaptereinheit 5 zusätzlich eine optische Kontrolleinrichtung 10 in Form einer LED-Anzeige auf, in welcher für eine Prozessorkarte 6 spezifische Daten alphanumerisch darstellbar sind. Sowohl die Auswahleinrichtung 9 als auch die optische Kontrolleinrichtung 10 sind mit einer Elektronik 11 verbunden, welche beispielsweise einen Auswahlvorgang einer bestimmten Prozessorkarte 6 regelt. Über den Stecker 12 ist die Adaptereinheit 5 zudem mit der Energieversorgungseinrichtung 4 des Mobilfunkendgeräts 1 verbindbar, so daß eine Stromversorgung der Elektronik 11 erfolgen kann. Falls die Adaptereinheit 5 mit einer Aufnahme der Rückwand des Mobilfunkendgeräts 1 versehen ist, kann diese Rückwand über die Adaptereinheit 5 mit der Energieversorgungseinrichtung 4 verbunden werden, so daß eventuelle technische Einrichtungen der Rückwand, wie etwa eine Vibrationseinrichtung, weiterhin funktionsfähig erhalten bleiben.

Das anhand der Figur 1 beschriebene Ausführungsbeispiel dient der Erläuterung und ist nicht beschränkend.

### Bezugszeichenliste

- 1: Mobilfunkendgerät
- 2: Aufnahmeeinrichtung
- 3: Kontaktfeld
- 4: Energieversorgungseinrichtung
- 5: Adaptereinheit
- 6: Prozessorkarte
- 7: Stecker
- 8: Kontaktfeld
- 9: Auswahleinrichtung
- 10: Kontrolleinrichtung
- 11: Elektronik
- 12: Stecker

## Patentansprüche

1. Adaptereinheit (5) für ein Mobilfunkendgerät (1), insbesondere Mobiltelefon, wobei das Mobilfunkendgerät (1) eine Lese-Schreibe-Elektronik und eine damit verbindbare Aufnahmeeinrichtung (2) zur Aufnahme einer Prozessorkarte (6) aufweist,
**gekennzeichnet durch**
wenigstens zwei Aufnahmeeinrichtungen zur Aufnahme jeweils einer Prozessorkarte (6), wobei die Aufnahmeeinrichtungen der Adaptereinheit (5) mit der Aufnahmeeinrichtung (2) des Mobilfunkendgeräts (1) verbindbar sind.

2. Adaptereinheit (5) nach Anspruch 1,
**dadurch gekennzeichnet,**
**daß** die Adaptereinheit (5) in ein Gehäuse des Mobilfunkendgeräts (2) integrierbar ist.

3. Adaptereinheit (5) nach einem der vorhergehenden Ansprüche,
**gekennzeichnet durch**
eine Auswahleinrichtung (9).

4. Adaptereinheit (5) nach einem der vorhergehenden Ansprüche,
**gekennzeichnet durch**
eine Kontrolleinrichtung (10).

5. Adaptereinheit (5) nach einem der vorhergehenden Ansprüche,
**dadurch gekennzeichnet,**
**daß** die Adaptereinheit (5) an die Energieversorgungseinrichtung des Mobilfunkendgeräts (1) anschließbar ist.
